# EUROPEAN PATENT APPLICATION

(11) **EP 1 177 957 A1**
(43) Date of publication of application: **06.02.2002**
(21) Application number: 00202759.7
(22) Date of filing: 03.08.2000
(51) Int. Cl.: B60R 25/08

(54) **Vehicle antitheft device**

(71) Applicant: Med S.p.A., 42100 Reggio Emilia (IT)
(72) Inventor: Reggiani, Medardo, 42100 Reggio Emilia (IT)
(74) Representative: Corradini, Corrado

(57) **Abstract**

The device comprises, for shutting off compressed air flow to the operating chamber (61) of the cylinder-piston unit (6), a valve with a valving element (20) normally closing an access port (12) to said cylinder-piston unit (6) but openable by electromagnetic means; said valve is arranged to normally maintain the valving element (20) in its closure position independently of the pressure upstream of the access port (12), but to maintain the valving element (20) in a stable opening position after having been operated by the electromagnetic means, even after these electromagnetic means have been deactivated, as long as the pressure upstream or downstream of the access port (12) exceeds a limiting value (P').

## Description

This invention relates to a vehicle antitheft device, applicable to a braking means which is released by feeding compressed air into a cylinder-piston unit.

A typical but not exclusive application of the invention is in trailers and semitrailers, which are normally provided not only with a service brake which operates by driver command during vehicle movement, but also with a parking brake which is normally in its applied state. This parking brake is subjected to the action of a cylinder-piston unit and is normally active. It is released only when the cylinder-piston unit is connected to a source of compressed air produced by a compressor on the engine.

An object of this invention is to provide an antitheft device which uses said parking brake in order to enable the vehicle to move only after the device has been activated with electromagnetic action and the parking brake fed with compressed air.

This and further objects are attained by the device of the invention as characterised in the claims.

The invention is based on the fact of comprising, for shutting off the compressed air flow to the operating chamber, a valve with a valving element normally closing an access port to said cylinder-piston unit but openable by electromagnetic means, and means arranged to normally maintain the valving element in its closure position independently of the pressure upstream of the access port, but to maintain the valving element in a stable opening position after having been operated by the electromagnetic means, even after these means have been deactivated, as long as the pressure upstream or downstream of the access port exceeds a limiting value. The invention is described in detail hereinafter with the aid of the accompanying figures, which illustrate a preferred but not exclusive embodiment thereof.

Figure 1 is a section through the device of the invention.

Figure 2 is an enlarged detail regarding the valve, in its open position.

Figure 3 shows the valve of Figure 2 in its closed position.

Figures 4A, 4B and 4C show three different intermediate positions of the valve of Figure 2, in passing from its closed to its open position.

Figure 5 shows an intermediate position of the valve in passing from its open to its closed position.

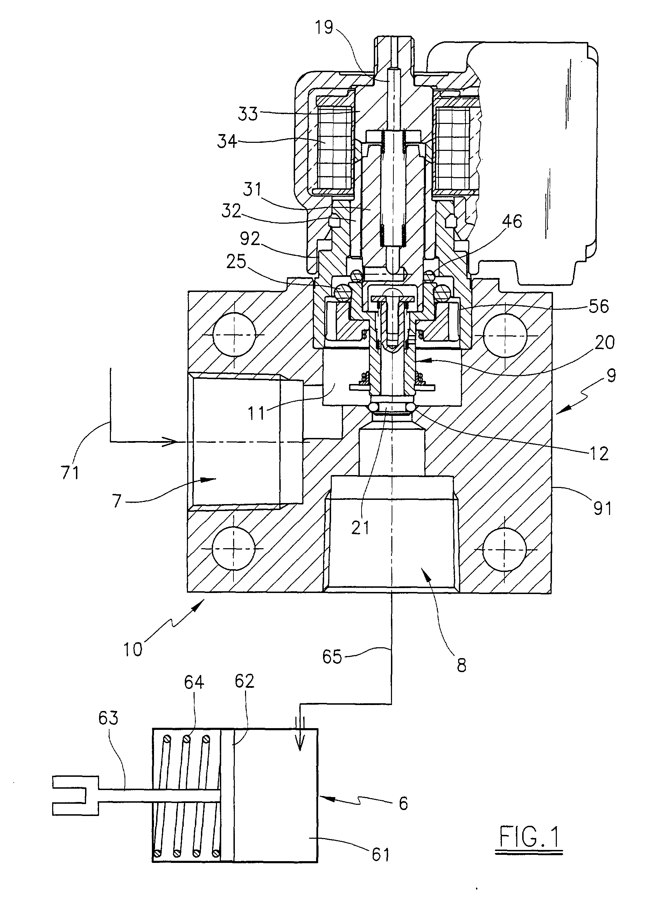

Figure 1 schematically shows a cylinder-piston unit 6 having an operating chamber 61 within which a piston 62 subjected to the constant action of a precompressed spring 64 operates to act via its rod 63 on a braking means (of known type, not shown in the figures). The spring 64 normally urges (towards the right) the rod 63, and with it the braking means into the position in which it brakes the vehicle to which it is applied. To deactivate the braking means and hence enable the vehicle to move, the chamber 61 must be pressurized until the rod 63 moves into the opposite position (towards the left) by overcoming the action of the spring 64. To pressurize the chamber 61, this is connected to a compressed air source, in particular a compressor positioned on the engine.

A valve indicated overall by 10 is applied to the cylinder-piston unit 6, to normally close the connection between the compressed air source and the operating chamber 61.

The valve 10 comprises a fixed body, indicated overall by 9, enclosing an axial chamber 11 within which a valving element 20 is axially movable. At the lower end of the chamber 11 there is an axial port 12 leading to an outlet 8 connected to a pipe 65 leading to the cylinder-piston unit 6, and an inlet 7 communicating with the lower part of the chamber 11 and connected to a pipe 71, itself connected to the compressed air source.

At the upper end of the chamber 11 there is an upper port 13 of greater diameter than the axial port 12 and connected to a discharge channel 19 which communicates freely with atmosphere.

The valving element 20 is movable between a normal lower position in which it closes the axial port 12, and an upper position in which it frees the port 12. The valving element 20 is urged into said normal lower position by a precompressed spring 15 and by a precompressed spring 51 (described in detail hereinafter), and is opened by electromagnetic means.

In detail, in the embodiment shown in the figures, the fixed body 9 comprises a lower element 91 defining the lower part of the chamber 11 and comprising the inlet 7 and outlet 8. Above the element 91 there is an upper element 92 partially inserted into the element 91 and defining the upper part of the chamber 11.

The valving element 20 comprises a lower outer portion 21 arranged to sealedly close the axial port 12 of the outlet 8 by means of an 0-ring 23, and an upper portion 22 of greater diameter than the lower portion 21 and slidable within the upper port 13.

The upper portion 22 has a lateral surface 22' on which an 0-ring 25 is positioned to seal against the lateral surface 22' and to make sealed contact with a radial edge 13' of the upper port 13. Normally (ie when the valving element 22 is in its closure position) the 0-ring 25 lies at a distance from the upper port 13.

The 0-ring 25 can also move axially by undergoing a relatively small sliding movement relative to the lateral surface 21', while remaining in contact with this latter.

The lateral surface 22' of the upper portion 22, on which the 0-ring 25 is positioned, is of frusto-conical shape with slight upwardly converging inclination. At the upper end of the surface 22', where this is of minimum diameter, there is an outwardly projecting radial wall 24 acting as a stop for the 0-ring 25.

In the embodiment shown in the figures, the valving element 20 comprises an outer part 27 of hollow cylindrical shape which comprises said upper portion 22, and an inner part 28 which comprises said lower portion 21.

A movable core of ferromagnetic material 31 is fixed in an upper position to the outer part 27 in a manner axially slidable within a tube 32 partly positioned within the upper element 92 and fixed thereto to project upwards.

The movable core 31 is attracted by electromagnetic action, by means of a fixed core 33 positioned above the tube 32 and subjected to the action of a coil 34 connected to a source of electricity.

The discharge channel 19 is positioned within the fixed core 33 and is connected to an axial bore 35 formed through the movable core 31. In its lower part the core 31 has a radial passage 36 lying above the upper end of the upper portion 22 and communicating with the bore 35.

The axial chamber 11 comprises a second upper port 43, the edge of which is defined by the lower end edge of the tube 32 and which, lying above the first upper port 13, has a diameter larger than the axial port 12 and smaller than the upper port 13, and corresponds in position to the radial passage 36, which is normally open to connect the discharge channel 19 to the axial chamber 11 via the port 13.

The spring 15 is housed in the bore 35 precompressed between the fixed core 33 and a step provided within the bore 35, to urge the movable core 31 downwards.

The inner part 28 is axially movable relative to the outer part 27 within a axial cavity 42 of this latter, there being interposed between the two parts 27 and 28 a spring 41 arranged to urge the inner part 28 upwards relative to the other part 27. The two parts 27 and 28 also define a pair of mutually contacting elements, namely a radial projection 44 on the upper end of the inner part 28, and an upwardly facing shoulder 45 provided at the top of the axial cavity 42. The two elements 44 and 45 come into mutual contact during the upward movement of the outer part 27, just after the 0-ring 25 seals against the radial edge 13' of the first upper port 13. After this contact, the outer part 27, during its upward movement, drags with it the inner part 28.

The valving element 20 has a second 0-ring 46 positioned above the first 0-ring 25, in contact with the upper end edge 22a of the upper portion 22, to come into sealed contact with a radial edge 43' of the second upper port 43, this contact occurring just after the first 0-ring 25, during the upward movement of the valving element, has made contact with the radial edge 13' of the first upper port 13.

The valve 10 also comprises an annular part 50 positioned about the outer part 27 and slidable axially thereto below the upper portion 22. A spring 51 is provided between the annular part 27 and the annular part 50, precompressed between the lower surface of the part 50 and a fixed radial ring 52 at the lower end of the part 27, to urge the part 50 upwards relative to the part 27.

Between the two parts 50 and 27 there are also provided mutually contacting elements, namely a downwardly facing radial shoulder 53 provided at the lower end of the upper portion 22, and an upwardly facing radial shoulder 54 provided on the annular part 50. These elements 53 and 54 limit the upward movement of the annular part 50 relative to the outer part 27, and are normally in mutual contact.

Between the annular part 50 and the lateral surface of the axial chamber 11 there are provided mutual contact elements, namely a downwardly facing shoulder 55 provided on the lateral surface of the chamber 11, and an upwardly facing radial surface 56 provided on the annular part 50. These elements limit the upward movement of the annular part 50, they being normally spaced apart but make contact during the upward movement of the outer part 27, just before the 0-ring 25 makes sealed contact with the upper port 13.

The annular part 50 comprises axial passages arranged to ensure free passage to the air entering the chamber 11 from the inlet 7, towards the upper ports 13 and 43.

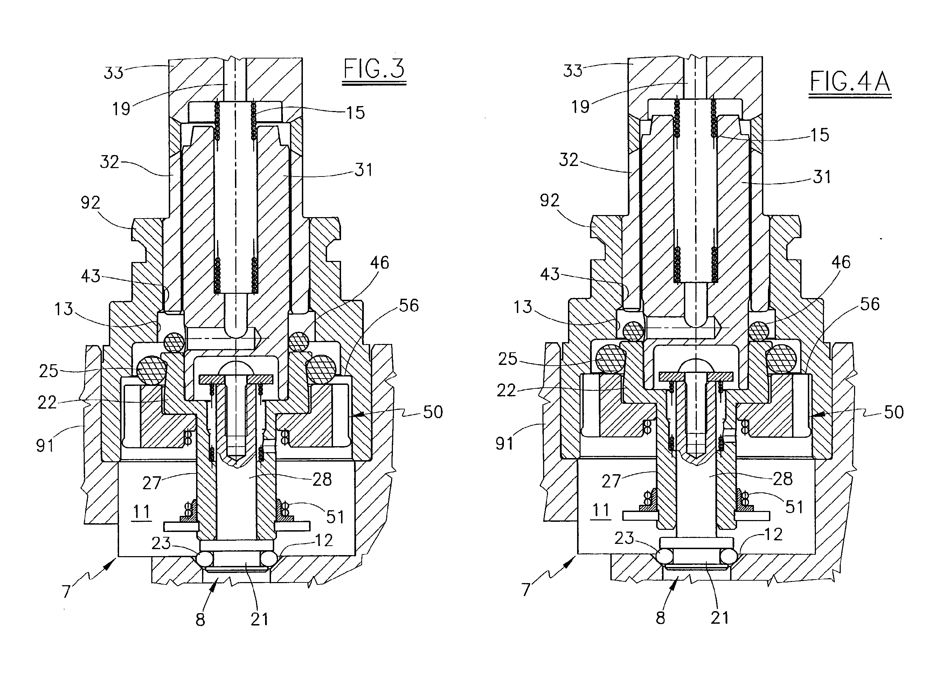

The valve is normally in the closed position (see Figures 1 and 3), in which the valving element 20 closes the port 12. In this configuration, no compressed air is present in the chamber 61 and the spring 15 forces the valving element 20 downwards. If compressed air is fed towards the chamber 61 to release the braking means, this air is intercepted by the lower portion 21. Even if this air is at high pressure, the valve remains closed as the air leaves through the open upper ports 13 and 43, and tends rather to maintain the valving element 20 lowered as the pressure is lower downstream of the port 12.

To liberate the axial port 12 the coil 34 has to be activated electrically, which can advantageously be done only by means (of known type, not shown in the figures) operable by a key.

On activating the coil 34, this, in a first stage, pulls the movable core 31 upwards and with it the outer part 27 and the annular part 50, while the inner part 28 remains in its lowered position closing the port 12. During this stage the electromagnetic attraction overcomes only the force of the spring 15 and of the spring 41 (which is also compressed), both relatively small. The compressed air fed into the chamber 11 is then discharged to the outside through the upper ports 13 and 43 and the discharge channel 19.

During this upward travel, the radial surface 56 firstly makes contact with the shoulder 55 and then locks the annular part 50 and commences to compress the spring 51 (see Figure 4A).

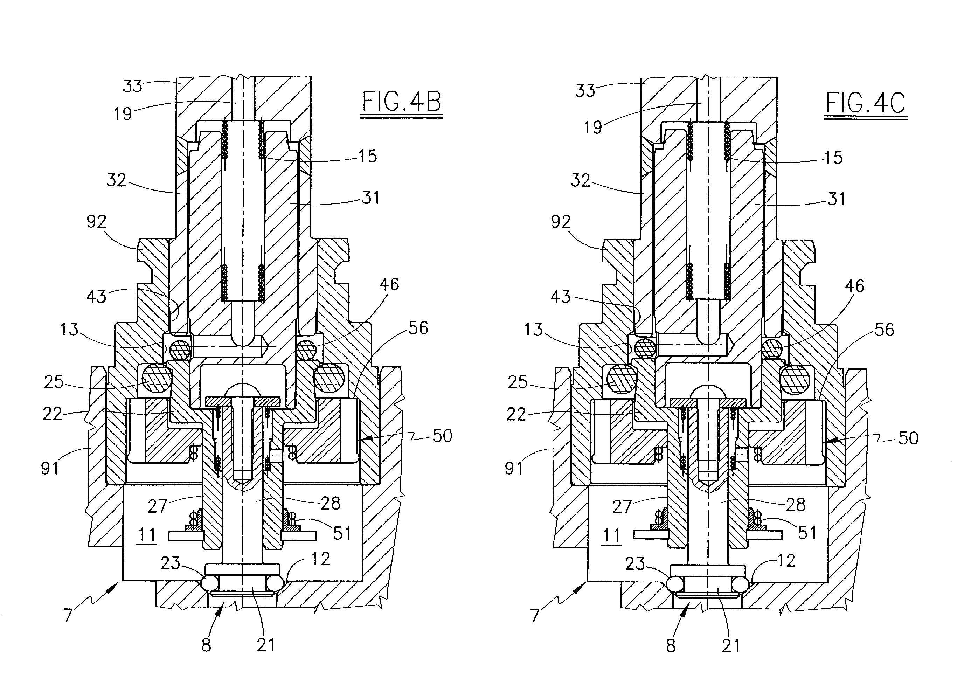

Then, as the outer part 27 continues to travel alone (the annular part 50 and the inner part 28 remaining at rest), the 0-ring 25, lying against the upper edge 22a, makes contact with the downwardly facing radial edge 13' of the upper port 13, hence closing air passage through the port 13 (see Figure 4B). Consequently from that moment, the air entering the chamber 11 pressurizes that chamber, whereas both downstream of the lower port 12 and downstream of the upper port 13 the pressure is substantially zero. Given that the diameter of the upper portion 22 is greater than the diameter of the lower portion 21, the pressure in the chamber 11 produces an upward thrust on the outer part 27 proportional to the pressure itself, in addition to the electromagnetic attraction.

These thrusts overcome both the reaction of the springs 15 and 41 and the reaction of the spring 51, to further urge the outer part 27 upwards until its shoulder 45 hits against the radial projection 44 (see Figure 4C), to then drag the inner part 28 upwards and open the axial port 12.

Further upward travel, which takes place after the 0-ring 25 has closed the upper port 13, occurs with sliding of the 0-ring 25 against the lateral surface 22' of the upper portion 22. This surface is slightly frusto-conical and hence, as upward travel continues, the 0-ring 25 increasingly tightens against the surface 22', to improve its seal thereagainst.

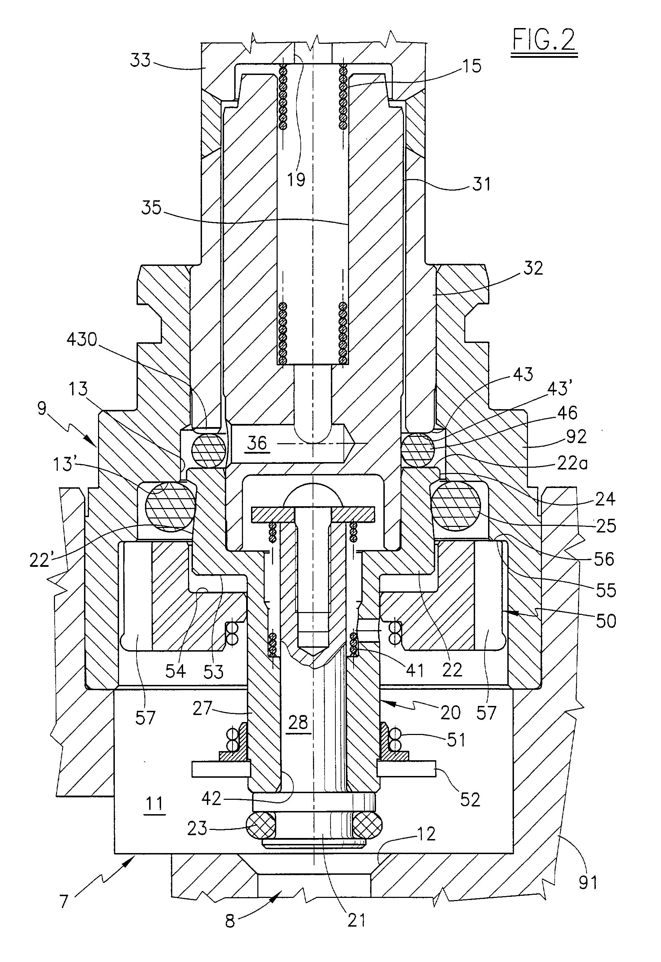

The valving element 20 continues its upward travel until the second 0-ring 46 finally makes contact with the seat 43' of the upper port 43, to also close this port. This closure is however incomplete, a very small passage 430 being left, to dispose of any leakages (infinitessimal) by the 0-ring 25. This seal by the second O-ring 46 serves as a back-up seal in case there are any leakages by the 0-ring 25, and hence makes the sealing against the passage of air from the chamber 11 to the discharge channel 19 more secure. The valve is now in its completely open position (see Figure 2).

At this point even if the coil 34 is deactivated, the valve remains in its open position as long as the pressure in the chamber 11 upstream and downstream of the port 12 remains higher than a limiting value P' (relatively small in practice) such that the upward thrust produced by it on the valving element 20 is sufficient to overcome the downward thrust produced by the various springs.

In practice, as long as the chamber 61 is connected to a compressed air source, positioned on the engine, the valve 10 remains open and the compressed air reaches the chamber 61 to maintain the parking brake in its released position.

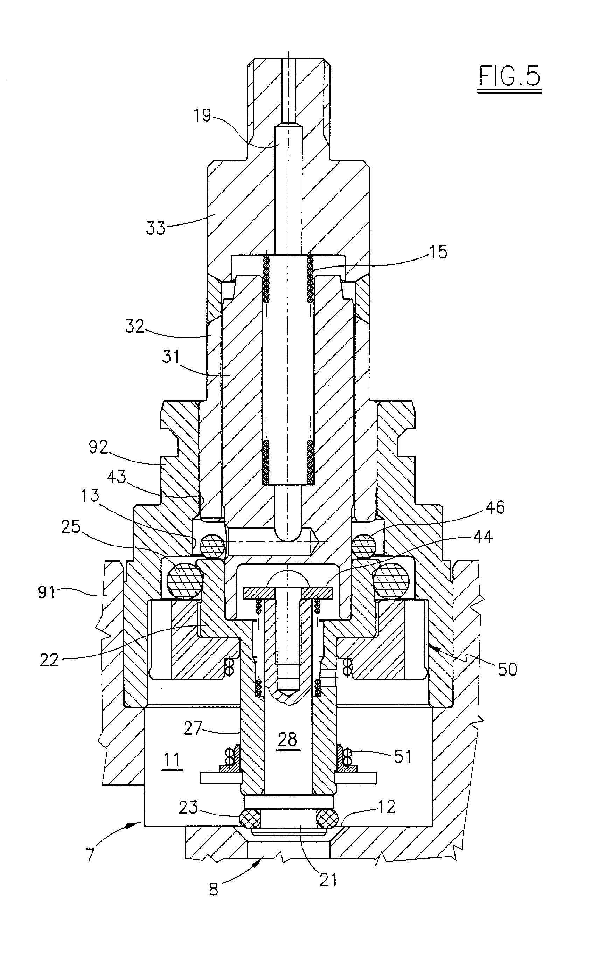

When the pressure in the chamber 11 falls below the limiting value P', in particular because the connection to the engine compressed air source has been interrupted, the force of the springs 15, 41 and 51 overcomes the thrust produced by the pressure, to urge the valving element 20 downwards (see Figure 5) and cause the 0-rings 25 and 46 to separate from the relative ports, to finally set the valve in the aforedescribed closed configuration.

At this point even if the chamber 11 is pressurized to a value exceeding the limiting value P', without electrically activating the coil 34 the valve 10 remains closed, as already explained.

Consequently, the device of the invention enables the parking brake of a vehicle, in particular a trailer or semitrailer, to be released only if the valve 10 is activated by an electrical command, and as this is governed by a safety key, this latter controls the ability to move the vehicle.

Numerous modifications of a practical and applicational nature can be made to the device of the invention, but without leaving the scope of the inventive idea as hereinafter claimed.

## Claims

1. An vehicle antitheft device, applicable to a braking means to be released by feeding compressed air into a cylinder-piston unit (6),
**characterised by** comprising, for shutting off the compressed air flow to the operating chamber (61) of the cylinder-piston unit (6), a valve with a valving element (20) normally closing an access port (12) to said cylinder-piston unit (6) but openable by electromagnetic means, said valve being arranged to normally maintain the valving element (20) in its closure position independently of the pressure upstream of the access port (12), but to maintain the valving element (20) in a stable opening position after having been operated by the electromagnetic means, even after these electromagnetic means have been deactivated, as long as the pressure upstream or downstream of the access port (12) exceeds a limiting value (P').

2. An antitheft device as claimed in claim 1, **characterised in that**
the valve (10) comprises an axial chamber (11), at the lower end of which said access port (12) is positioned, said valving element (20 being movable axially within said axial chamber (11), said axial chamber (11) having, at its upper end, an upper port (13) of greater diameter than said access port (12), and communicating with an air discharge channel (19),
said valving element (20) comprising a lower portion (21) sealedly closing the access port (12), and an upper portion (22) of greater diameter than the lower portion (21) and slidable within the upper port (13), and
an 0-ring (25) carried by the valving element (20) and positioned on a lateral surface (22') of the upper portion (22), to seal against this lateral surface (22') and to make sealed contact against the upper port (13), said 0-ring (25) normally being positioned at a distance from the upper port (13) and being able to move axially to said lateral surface (22'), while remaining in contact therewith.

3. An antitheft device as claimed in claim 2, **characterised in that** that lateral surface (22') of the upper portion (22) of the valving element (20) on which the 0-ring (25) is positioned is of frusto-conical shape with slight upwardly converging inclination.

4. An antitheft device as claimed in claim 2, **characterised in that** the valving element (20) comprises an outer part (27) incorporating said upper portion (22) slidable within the upper port (13), and an inner part (28) which incorporates said lower portion (21) closing the access port (12) and is movable axially relative to the outer part (27), between the inner part (28) and the outer part (27) there being provided a spring means (41) arranged to urge the inner part (28) upwards, and mutually contacting elements (44, 45) by which, during its upward movement, the outer part (27) drags the inner part (28) with it, said contact occurring during the upward movement of the outer part (27), just after the 0-ring (25) has made sealed contact with the upper port (13).

5. An antitheft device as claimed in claim 2, **characterised in that** said axial chamber (11) comprises a second upper port (43) which, lying above the first upper port (13), has a greater diameter than said access port (12) and normally communicates with the discharge channel (19), said valving element (20) comprising a second 0-ring (46) positioned above the first 0-ring (25) in contact with the upper end edge (22a) of the upper portion (22), to make sealed contact against the upper second port (43) just after, during the upward movement of the valving element (20), the first 0-ring (25) has made contact with the first upper port (13).

6. An antitheft device as claimed in claim 4, **characterised in that**
the valve comprises an annular part (50) positioned about the outer part (27) and movable axially relative thereto,
there being provided, between the outer part (27) and the annular part (50), a spring means (51) arranged to upwardly urge the annular part (50), and second mutually contacting elements (53, 54) which limit the upward movement of the annular part (50) relative to the outer part (28), said second elements (53, 54) being normally in mutual contact,
between the annular part (50) and the surface of the axial chamber (11) there being provided third mutually contacting elements (55, 56) which limit the upward movement of the annular part (50), said third mutually contacting elements (55, 56) being normally spaced apart and making contact during the upward movement of the outer part (27), just before the 0-ring (25) makes sealed contact with the upper port (13).
